# EUROPEAN PATENT APPLICATION

(11) **EP 4 645 838 A1**
(43) Date of publication of application: **05.11.2025**
(21) Application number: 23956404.0
(22) Date of filing: 25.10.2023
(51) Int. Cl.: H04M 1/02, H04M 1/72454

(54) **BENDABLE DEVICE, CONTROL SYSTEM AND CONTROL METHOD THEREFOR, AND STORAGE MEDIUM**

(71) Applicant: Boe Technology Group Co., Ltd., Beijing 100015 (CN); Chengdu BOE Optoelectronics Technology Co., Ltd., Chengdu, Sichuan 611731 (CN)
(72) Inventor: LI, Yuanjie, Beijing 100176 (CN)
(74) Representative: Studio Torta S.p.A.
(86) International application number: PCT/CN2023/126497
(87) International publication number: WO 2025/086152

(57) **Abstract**

The present disclosure provides a control method applicable to a bendable device (100), the bendable device includes a body portion (110) and at least one bendable portion (120a, 120b), the bendable portion can be bent or flattened relative to the body portion, wherein the control method includes: generating event data corresponding to the at least one bendable portion based on a spatial position of the at least one bendable portion relative to the body portion, the event data recording an event of the at least one bendable portion occurring relative to the body portion at a signal occurrence moment; controlling the bendable device based on the event data and a current application scenario of the bendable device. The present disclosure also relates to a control system (200) to which the control method can be applied and a bendable device including the control system, and also to a computer-readable storage medium.

## Description

### TECHNICAL FIELD

The present disclosure relates to the field of display technology, in particular, to a bendable device as well as a control system and a control method applicable to the bendable device, and also to a computer-readable storage medium, which can be used to implement the control method.

### BACKGROUND

Recently, the flexible display technology becomes increasingly mature, and more and more terminal devices adopting the flexible display technology also appear in the market, including folding-screen mobile phones, mobile phones with a sliding and rolling screen, and wristband mobile phones and so on. These innovative products, which not only provide a larger display area and a convenient carrying way, but also bring an entirely new interactive usage way, bring the consumer a tremendous strike and entirely new usage experience.

### SUMMARY

According to a first aspect of the present disclosure, there is provided a control method applicable to a bendable device including a body portion and at least one bendable portion that can be bent or flattened relative to the body portion, wherein the control method includes following steps: generating event data corresponding to the at least one bendable portion based on a spatial position of the at least one bendable portion relative to the body portion, the event data recording an event of the at least one bendable portion occurring relative to the body portion at a signal occurrence moment; controlling the bendable device based on the event data and a current application scenario of the bendable device.

According to some exemplary embodiments of the present disclosure, the at least one bendable portion includes a first bendable portion, the body portion includes a body display area, each bendable portion includes a bendable display area, and the current application scenario includes that the body display area and at least the bendable display area of the first bendable portion are collectively displaying a photographing preview interface. The step of generating event data corresponding to the at least one bendable portion based on a spatial position of the at least one bendable portion relative to the body portion includes: generating a bending event and a flattening event corresponding to the first bendable portion during a period that the photographing preview interface is displayed, wherein a signal occurrence moment of the bending event precedes a signal occurrence moment of the flattening event. The step of controlling the bendable device based on the event data and a current application scenario of the bendable device includes: in response to the bending event and the flattening event, controlling the bendable device to take a picture.

According to some exemplary embodiments of the present disclosure, the control method further includes: in response to a time interval between the signal occurrence moment of the bending event and the signal occurrence moment of the flattening event being greater than or equal to a preset time interval threshold, controlling the bendable device to perform delayed photographing.

According to some exemplary embodiments of the present disclosure, the control method further includes: determining a delay time for the delayed photographing based on a difference value between the time interval and the time interval threshold.

According to some exemplary embodiments of the present disclosure, the control method further includes: selecting a delay time for the delayed photographing from a plurality of preset delay times.

According to some exemplary embodiments of the present disclosure, the at least one bendable portion includes a first bendable portion, the body portion includes a body display area, each bendable portion includes a bendable display area, and the current application scenario includes that the body display area and at least the bendable display area of the first bendable portion are collectively displaying a photographing preview interface. The step of generating event data corresponding to the at least one bendable portion based on a spatial position of the at least one bendable portion relative to the body portion includes: generating a plurality of bending events corresponding to the first bendable portion during a period that the photographing preview interface is displayed. The step of controlling the bendable device based on the event data and a current application scenario of the bendable device includes: in response to a time interval between a signal occurrence moment of a first bending event of the plurality of bending events and a signal occurrence moment of a last bending event of the plurality of bending events being greater than or equal to a preset time interval threshold, controlling the bendable device to perform delayed photographing.

According to some exemplary embodiments of the present disclosure, the at least one bendable portion includes a first bendable portion, the body portion includes a body display area, each bendable portion includes a bendable display area, and the current application scenario includes that the body display area and at least the bendable display area of the first bendable portion are collectively displaying a video preview interface. The step of generating event data corresponding to the at least one bendable portion based on a spatial position of the at least one bendable portion relative to the body portion includes: generating a bending event and a flattening event corresponding to the first bendable portion during a period that the video preview interface is displayed, wherein a signal occurrence moment of the bending event precedes a signal occurrence moment of the flattening event. The step of controlling the bendable device based on the event data and a current application scenario of the bendable device includes: in response to the bending event and the flattening event, controlling the bendable device to perform video recording.

According to some exemplary embodiments of the present disclosure, the at least one bendable portion includes a first bendable portion, the body portion includes a body display area, each bendable portion includes a bendable display area, and the current application scenario includes that the body display area and at least the bendable display area of the first bendable portion are collectively displaying a video recording interface. The step of generating event data corresponding to the at least one bendable portion based on a spatial position of the at least one bendable portion relative to the body portion includes: generating a bending event and a flattening event corresponding to the first bendable portion during a period that the video recording interface is displayed, wherein a signal occurrence moment of the bending event precedes a signal occurrence moment of the flattening event. The step of controlling the bendable device based on the event data and a current application scenario of the bendable device includes: in response to the bending event and the flattening event, controlling the bendable device to stop video recording.

According to some exemplary embodiments of the present disclosure, the at least one bendable portion includes a first bendable portion, the body portion includes a body display area, each bendable portion includes a bendable display area, and the current application scenario includes that the bendable display area of the first bendable portion is displaying a notification that a message is received. The step of generating event data corresponding to the at least one bendable portion based on a spatial position of the at least one bendable portion relative to the body portion includes: generating a bending event corresponding to the first bendable portion during a period that the notification that a message is received is displayed in the bendable display area of the first bendable portion. The step of controlling the bendable device based on the event data and a current application scenario of the bendable device includes: in response to the bending event, displaying content of the message in the body display area of the body portion.

According to some exemplary embodiments of the present disclosure, the at least one bendable portion includes a first bendable portion, the body portion includes a body display area, each bendable portion includes a bendable display area, and the current application scenario includes that the body display area of the body portion is displaying content of the message. The step of generating event data corresponding to the at least one bendable portion based on a spatial position of the at least one bendable portion relative to the body portion includes: generating a bending event corresponding to the first bendable portion during a period that the content of the message is displayed in the body display area of the body portion. The step of controlling the bendable device based on the event data and a current application scenario of the bendable device includes: in response to the flattening event, making the bendable device stop displaying the content of the message and resume an interface prior to displaying the content of the message.

According to some exemplary embodiments of the present disclosure, the at least one bendable portion includes a first bendable portion, the body portion includes a body display area, each bendable portion includes a bendable display area, and the current application scenario includes that the body display area of the body portion is displaying content of a message, and the control method further includes: receiving a gesture instruction from a user during a period that the body display area of the body portion is displaying the content of the message; in response to the gesture instruction, making the bendable device stop displaying the content of the message and resume an interface prior to displaying the content of the message.

According to some exemplary embodiments of the present disclosure, the at least one bendable portion includes a first bendable portion, the body portion includes a body display area, each bendable portion includes a bendable display area, and the current application scenario includes that the bendable display area of the first bendable portion is displaying a notification that a message is received. The control method further includes: generating a touch control event in response to a gesture input by a user during a period that the bendable display area of the first bendable portion is displaying a notification that a message is received. The step of generating event data corresponding to the at least one bendable portion based on a spatial position of the at least one bendable portion relative to the body portion includes: generating a bending event corresponding to the first bendable portion during a period that the bendable display area of the first bendable portion is displaying a notification that a message is received. The step of controlling the bendable device based on the event data and a current application scenario of the bendable device includes: in response to the bending event and the touch control event, displaying content of the message in the body display area of the body portion.

According to some exemplary embodiments of the present disclosure, the at least one bendable portion includes a first bendable portion and a second bendable portion, the first bendable region and the second bendable display region are located at two sides of the body display area, and the current application scenario includes selecting an operation mode of the bendable device. The step of generating event data corresponding to the at least one bendable portion based on a spatial position of the at least one bendable portion relative to the body portion includes: generating a first bending event corresponding to the first bendable portion and a second bending event corresponding to the second bendable portion when selecting an operation mode of the bendable device. The step of controlling the bendable device based on the event data and a current application scenario of the bendable device includes: in response to the first bending event and the second bending event, controlling the bendable device to operate in a first operation mode.

According to some exemplary embodiments of the present disclosure, the step of generating event data corresponding to the at least one bendable portion based on a spatial position of the at least one bendable portion relative to the body portion includes: generating a first flattening event corresponding to the first bendable portion and a second flattening event corresponding to the second bendable portion when selecting an operation mode of the bendable device; the step of controlling the bendable device based on the event data and a current application scenario of the bendable device includes: in response to the first flattening event and the second flattening event, controlling the bendable device to operate in a second operation mode, which is different from the first operation mode.

According to some exemplary embodiments of the present disclosure, the event data includes: a sensor signal, a sensing location, a signal occurrence event, and status information.

According to a second aspect of the present disclosure, there is provided a control system applicable to a bendable device including a body portion and at least one bendable portion that can be bent or flattened relative to the body portion, wherein the control system includes: a sensing module including a sensor corresponding to the bendable portion, the sensor being configured to generate a sensor signal based on a spatial position of the bendable portion relative to the body portion; an event data generating module configured to generate event data corresponding to the bendable portion based on the sensor signal, a sensing position of the sensor, a signal occurrence moment, and status information; a control strategy determination module configured to: determine a control strategy for the bendable device based on the event data and a current application scenario of the bendable device; an operation performing module configured to perform an operation to the bendable device based on the control strategy.

According to some exemplary embodiments of the present disclosure, the sensor includes: a magnet on the body portion and a Hall element on a corresponding bendable portion; or a Hall element on the body portion and a magnet on a corresponding bendable portion.

According to a third aspect of the present disclosure, there is provided a bendable device including a body portion and at least one bendable portion that can be bent or flattened relative to the body portion, wherein the bendable device includes the control system according to the second aspect of the present disclosure and various exemplary embodiments thereof.

According to a fourth aspect of the present disclosure, there is provided a computer-readable storage medium. The computer-readable storage medium stores thereon executable instructions that, when executed by a processor, implement the control method according to the first aspect of the present disclosure and various exemplary embodiments thereof.

### BRIEF DESCRIPTION OF DRAWINGS

Hereinafter, exemplary embodiments of the present disclosure will be described in detail with reference to the drawings; in which:
FIG. 1 schematically illustrates a bendable device according to some exemplary embodiments of the present disclosure;
FIGs. 2A and 2B schematically illustrate a sensor for sensing the flattening and bending states of the bendable device according to some exemplary embodiments of the present disclosure;
FIG. 3 schematically illustrates, in the form of a block diagram, a control system applicable to the bendable device, according to some exemplary embodiments of the present disclosure;
FIG. 4 schematically illustrates event data according to some exemplary embodiments of the present disclosure;
FIG. 5 schematically illustrates, in the form of a flow chart, a control method applicable to the bendable device, according to some exemplary embodiments of the present disclosure;
FIG. 6 illustrates an exemplary application scenario of the bendable device according to the present disclosure;
FIGs. 7A, 7B, and 7C schematically illustrate, in the form of a flow chart, control methods applicable to the bendable device, according to some exemplary embodiments of the present disclosure;
FIG. 8 illustrates an exemplary application scenario of the bendable device according to the present disclosure;
FIGs. 9A and 9B schematically illustrate, in the form of a flow chart, control methods applicable to the bendable device, according to some exemplary embodiments of the present disclosure;
FIG. 10 illustrates an exemplary application scenario of the bendable device according to the present disclosure;
FIG. 11 schematically illustrates, in the form of a flow chart, a control method applicable to the bendable device, according to some exemplary embodiments of the present disclosure;
FIGs. 12A and 12B schematically illustrate, in the form of a flow chart, control methods applicable to the bendable device, according to some exemplary embodiments of the present disclosure.

It should be understood that the drawings are merely schematic illustrations of exemplary embodiments of the disclosure, and are not limitations to the disclosure, so they are not necessary to be drawn to scale. Furthermore, in the drawings, the same or similar features are denoted by the same or similar reference numerals.

### DETAILED DESCRIPTION

Various exemplary embodiments of the present disclosure are described below in conjunction with the drawings to enable those having ordinary skills in the art to fully understand and implement the technical solutions according to the present disclosure.

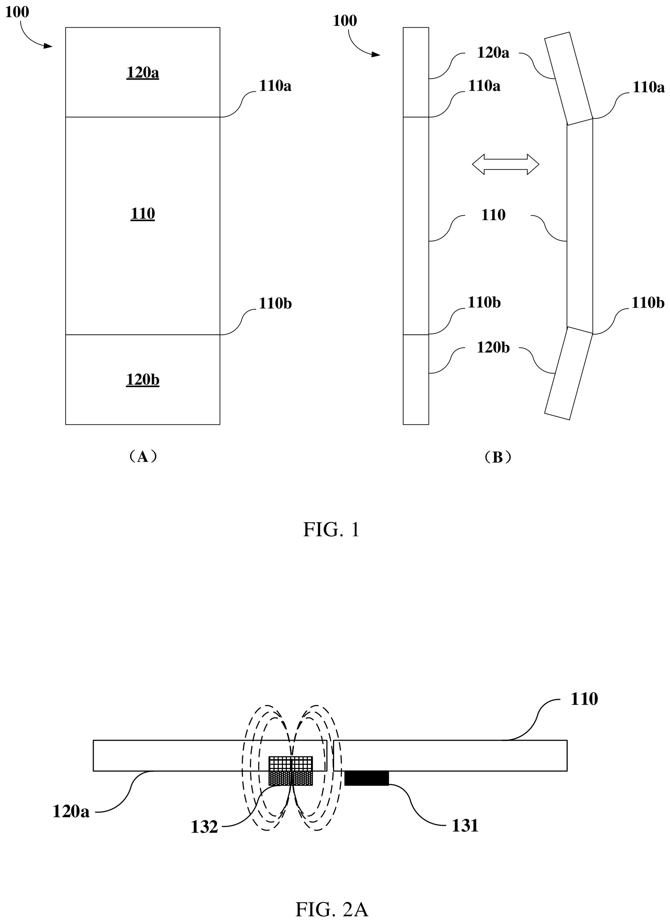

Referring to FIG. 1, a bendable device according to some exemplary embodiments of the present disclosure is schematically illustrated. As shown in view (A) in FIG. 1, the bendable device 100 includes a body portion 110, a first bendable portion 120a and a second bendable portion 120b. The body portion 110 may include a body display area, the first bendable portion 120a may include a first bendable display area, and the second bendable portion 120b may include a second bendable display area. The body display area, the first bendable display area and the second bendable display area may be an integrally formed flexible display area, for example, they are respectively different display areas of a flexible display screen. However, in other embodiments, the body display area, the first bendable display area and the second bendable display area may be display areas separate from each other, for example, they may be three separate and individual display screens. The first bendable portion 120a is connected to the body portion 110 at a first side 110a thereof, and the second bendable portion 120b is connected to the body portion 110 at a second side 110b thereof.

As shown in view (B) in FIG. 1, the first bendable portion 120a may be rotated relative to the body portion 110 about its first side 110a, thereby being bent relative to the body portion 110, and the second bendable portion 120b may be rotated relative to the body portion 110 about its second side 110b, thereby being bent relative to the body portion 110. View (B) shows a flattening state (left image) and a bending state (right image) of the bendable device 100. In the flattening state, the body display area of the body portion 110, the first bendable display area of the first bendable portion 120a, and the second bendable display area of the second bendable portion 120b can be in the same plane so that the bendable device 100 may be used as a device such as a mobile phone, a tablet computer, or the like. In the bending state, the first bendable portion 120a and/or the second bendable portion 120b are/is at an angle to the body portion 110, and thus, the body display area, the first bendable display area and the second bendable display area are no longer in the same plane. The bendable device 100 in the bending state may be used as a wearable device such as a smart watch, a smart band, or the like.

As shown in FIG. 1, the body portion 110, the first bendable portion 120a, and the second bendable portion 120b of the bendable device 100 may each have a generally flat plate shape. It should be understood, however, that this is not necessary and that the body portion 110, the first bendable portion 120a and the second bendable portion 120b may have any other suitable shape. For example, the first bendable portion 120a and the second bendable portion 120b of the bendable device 100 may have a generally "L" or "U" shape in the side view shown in view (B) of FIG. 1, such that the bendable device 100 may form a wristwatch or bracelet-like structure in a bending state, which is suitable for wearing. The present disclosure does not limit the shape of the body portion 110, the first bendable portion 120a and the second bendable portion 120b of the bendable device 100. It should also be understood that the bendable device 100 shown in FIG. 1 includes two bendable portions. However, this is merely exemplary and not limiting, and the bendable device 100 may include one or more bendable portions, as desired. As a non-limiting example, the bendable device 100 may be implemented as a folder-screen phone, a mobile phone with a sliding and rolling screen, a wristband phone, a smart band, or the like. The present disclosure does not impose any limitation on the specific type of implementation of the bendable device 100.

It should be understood that, in the present disclosure, if nothing else is stated, the term "bending" then refers to rotating the bendable portion relative to the body portion through an angular range about where the two join, so that the bendable portion is at an angle to the body portion (and thus the display area of the bendable portion is also at an angle to the display area of the body portion) as shown in the right image in view (B) of FIG. 1; in addition, the term "flattening" refers to a situation where the bendable portion is in relation to the body portion such that the display areas of both are in the same plane, as shown in the left image in view (B) of FIG. 1.

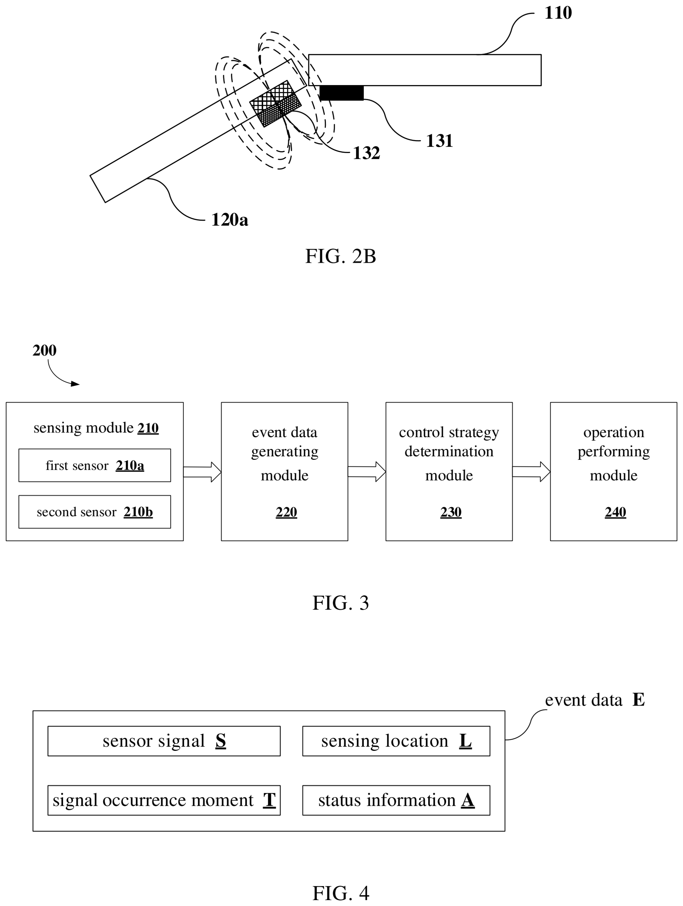

Referring to FIGs. 2A and 2B in conjunction with FIG. 1, a sensor including a magnet and a Hall element and used for sensing the flattening and bending states of a bendable device is schematically illustrated in FIGs. 2A and 2B, according to some exemplary embodiments of the present disclosure. As shown in FIG. 2A, a Hall element 131 is provided on a side of the body portion 110 adjacent to the first bendable portion 120a, and a magnet 132 is provided in the first bendable portion 120a at a position adjacent to the Hall element 131. The magnet 132 may be arranged with its N-S pole direction perpendicular to the mounting surface of the first bendable portion 120a such that its magnetic field lines are shown as dashed lines in FIG. 2A. The Hall element 131 and the magnet 132 are disposed such that the distance between the two ensures that the magnetic flux at the Hall element 131 is below the induction threshold of the Hall element 131. Therefore, in the flattening state shown in FIG. 2A, the Hall element 131 cannot sense the magnetic field of the magnet 132, so that a first sensing signal reflecting that the body portion 110 and the first bendable portion 120a are in the flattening state can be output.

Referring to FIG. 2B, the first bendable portion 120a is bent relative to the body portion 110 such that the position of the magnet 132 is also thereby changed relative to the Hall element 131. The change in the position of the magnet 132 results in a change in the magnetic field distribution in space, thereby increasing the magnetic flux at the Hall element 131. In response to the increase of the magnetic flux at the Hall element 131, the Hall element 131 induces the magnetic field of the magnet 132, and thus can output a second sensing signal reflecting that the body portion 110 and the first bendable portion 120a are in the bending state. The second sensing signal should be different from the first sensing signal. As a non-limiting example, the first sensing signal may be a low potential signal and the second sensing signal may be a high potential signal, or vice versa.

It should be understood that the sensor shown in FIGs. 2A and 2B that can be used to sense the flattening and bending states of the bendable device is exemplary and not limiting. Any suitable sensing module may be used to detect the flattening and bending states of the bendable device, depending on the actual needs. As non-limiting examples, contact switches, capacitors and the like may be used as the sensing module as mentioned above. Furthermore, FIGs. 2A and 2B illustrate a sensor implemented with a magnet and a Hall element, which can be used to sense the flattening and bending states of the first bendable portion 120a relative to the body portion 110, but it should be understood that the same sensor can also be used to sense the flattening and bending states of the second bendable portion 120b relative to the body portion 110.

Referring to FIG. 3 in conjunction with FIG. 1, a control system applicable to the bendable device is schematically illustrated in the form of a block diagram, according to some exemplary embodiments of the present disclosure. As shown in FIG. 3, the control system 200 includes a sensing module 210, an event data generating module 220, a control strategy determination module 230, and an operation performing module 240. A bendable device according to the present disclosure may include the control system.

The sensing module 210 may include a sensor for sensing the spatial position of the bendable portion relative to the body portion, thereby sensing its flattening and bending states relative to the body portion. In case the control system 200 is applied to the bendable device 100 shown in FIG. 1, the sensing module 210 may include a first sensor 210a and a second sensor 210b, wherein the first sensor 210a may be configured to sense the flattening and bending states of the first bendable portion 120a relative to the body portion 110 and generate a corresponding sensor signal, and the second sensor 210b may be configured to sense the flattening and bending states of the second bendable portion 120b relative to the body portion 110 and generate a corresponding sensor signal. The first sensor 210a and the second sensor 210b may each be implemented as the sensor based on a magnet and a Hall element, which is as shown in FIGS. 2A and 2B. The sensing module 210 sends sensor signals generated by the sensors to the event data generating module 220.

The event data generating module 220 may be configured to generate event data corresponding to the bendable portion based on the spatial position of the bendable portion relative to the body portion, the event data recording an event of the bendable portion occurring relative to the body portion at a signal occurrence moment.

Referring to FIG. 4 in conjunction with FIG. 3, FIG. 4 schematically illustrates event data according to some exemplary embodiments of the present disclosure. As shown in FIG. 4, the event data E may include: a sensor signal S, a sensing position L, a signal occurrence moment T, and status information A. The sensor signal S may be a signal generated by a sensor for sensing the spatial position of the bendable portion relative to the body portion. The sensor signal S may be of two different types, for example a first sensing signal S1 and a second sensing signal S2, depending on whether the bendable portion is in a flattening or bending state relative to the body portion. The sensing position L refers to which bendable portion the sensor is used to sense, in other words, which bendable section the sensor corresponds to. The signal occurrence moment T refers to the time at which the sensor signal S occurs, and thus the event data E records the event of the bendable portion, which occurs relative to the body portion at that moment. The status information A refers to whether the bendable portion is in a flattening state or a bending state relative to the body portion. The status information A is a behavior determination after event pre-processing, for example, if the sensor signal S = S2 (i.e., the second sensing signal), the sensing position L = L1 (i.e., the first bendable portion 120a), it is determined that at the signal occurrence moment T, the status information A = A2 (i.e., the first bendable portion 120a is bent). This is a mapping relationship of event behaviors, which can be used in many arbitrary combinations depending on the actual situation. The above information is encapsulated into an individual data packet, which constitutes the event data E. It should be understood that the form of the event data E shown in FIG. 4 is merely exemplary and not limiting. Any suitable information may be used to constitute the event data depending on actual needs, and therefore, the present disclosure does not impose any limitation to the form in which the event data may be constituted.

With continued reference to FIG. 3 and in conjunction with FIG. 1 for detailed explanations, when the bendable device 100 is in the bending state as shown in the right image in view (B) of FIG. 1, at this moment (i.e., the signal occurrence moment T), the event data generating module 220 may receive a sensor signal S (for example, the second sensing signal S2 as mentioned above) output by the first sensor 210a, the sensing position L of the first sensor 210a is the first bendable portion 120a, and thus, the status information A is the bending state A2, and therefore, the event data generating module 220 may package the information as the event data that records the bending event of the first bendable portion 120a relative to the body portion 110 occurring at the signal occurrence moment T. Furthermore, in the bending situation shown in the right image in view (B) of FIG. 1, at this moment (i.e., the signal occurrence moment T), the event data generating module 220 may also receive a sensor signal S (for example, the second sensing signal S2 as mentioned above) output by the second sensor 210b, the sensing position L of the second sensor 210b is the second bendable portion 120b, and thus the status information A is the bending state A2, so that the event data generating module 220 may also package the information as the event data that records the bending event of the second bendable portion 120b relative to the body portion 110 occurring at the signal occurrence moment T.

After the event data is generated by the event data generating module 220, the generated event data is sent to the control strategy determination module 220.

The control strategy determination module 230 may be configured to determine a control strategy for the bendable device based on the event data and a current application scenario of the bendable device. It should be understood that, in accordance with the present disclosure, the event data includes data information independent from any control operation and records only the event of the bendable portion occurring at a certain moment relative to the body portion, for example, a bending event or a flattening event). Thus, when an event-based control of the bendable device is desired, the event data can be combined with the current application scenario of the bendable device to achieve an event-based control of the bendable device. Such a combination may be achieved by pre-establishing correlations between event data and application scenarios of the bendable device. Further, as non-limiting examples, the current application scenarios of the bendable device may include displaying a photographing preview interface, displaying a video preview interface, displaying a notification that a message is received, and so on.

The operation performing module 240 may be configured to perform an operation to the bendable device based on a control strategy determined by the control strategy determination module 230. For example, the operation performing module 240 may control the bendable device to perform operations such as taking a picture, making a video recording, or displaying a message based on the determined control strategy, which will be described in detail below.

Thus, the control system according to the present disclosure applicable to a bendable device realizes an event-driven based control of the bendable device by packaging the bending and flattening states of the bendable device sensed by the sensors into independent event data and pre-establishing correlations between the event data and various application scenarios of the bendable device. Because the event data for drive control is independent, and its correlation with each application scenario can be predetermined according to actual needs, the control system according to the present disclosure enables very flexible control, and has very excellent expandability.

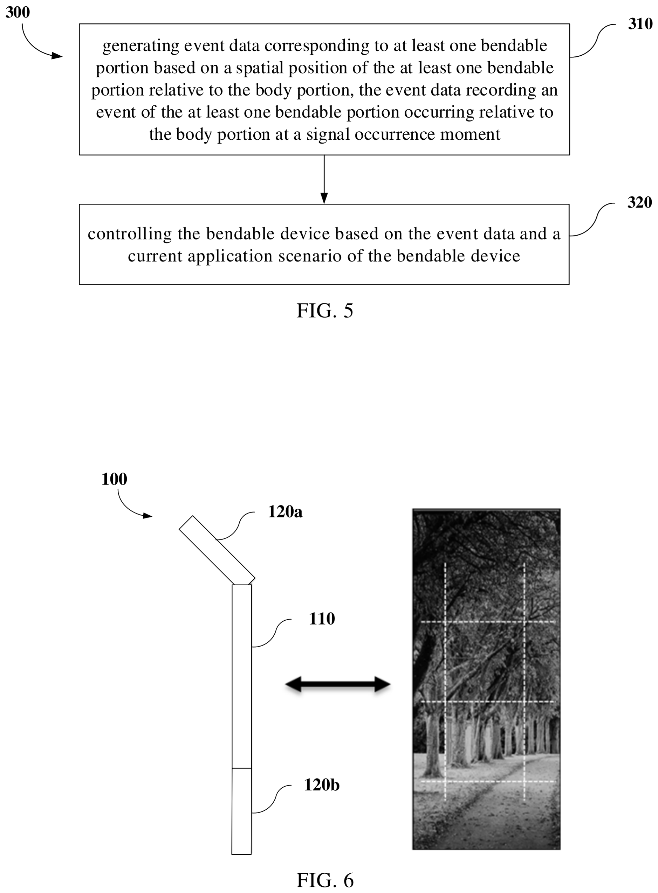

Referring to FIG. 5, it schematically illustrates, in the form of a flow chart, a control method applicable to a bendable device, according to some exemplary embodiments of the present disclosure. As shown in FIG. 5, the control method 300 includes steps 310 and 320:
at step 310, generating event data corresponding to at least one bendable portion based on a spatial position of the at least one bendable portion relative to the body portion, the event data recording an event of the at least one bendable portion occurring relative to the body portion at a signal occurrence moment;
at step 320, controlling the bendable device based on the event data and a current application scenario of the bendable device.

At step 310, the control method 300 essentially packages the bending and flattening states of the bendable device, which are sensed by the sensors, into the independent event data that records an event of a corresponding bendable portion with respect to the body portion, which occurs at a signal occurrence moment. In some exemplary embodiments, the event data may include: a sensor signal, a sensing location, a signal occurrence event, and status information. However, in other exemplary embodiments, the event data may include any other suitable information. At step 320, the control method 300 controls the bendable device to operate accordingly, essentially based on the pre-established correlation between the event data and the application scenarios, using the corresponding control strategy. Thus, in conjunction with the control system 200 shown in FIG. 3, step 310 of the control method 300 may be implemented by the sensing module 210 and the event data generating module 220 in the control system 200, and step 320 may be implemented by the control strategy determination module 230 and the operation performing module 240.

It should be understood that the control method according to the present disclosure applicable to a bendable device realizes event-driven based control of the bendable device by generating independent event data and pre-establishing correlations between the event data and various application scenarios of the bendable device. Because the event data for driving the control is independent, and its correlation with each application scenario can be predetermined according to actual needs, the control method according to the present disclosure enables very flexible control, and has very excellent expandability.

Referring to FIG. 6 in conjunction to FIG. 1, an application scenario of a bendable device according to the present disclosure is schematically illustrated. As shown in FIG. 6, the bendable device 100 is used to take pictures or videos. For example, the body display area of the body portion 120a, the first bendable display area of the first bendable portion 120a and the second bendable display area of the second bendable portion 120b of the bendable device 100 are collectively displaying a photographing preview interface or a video preview interface, as the schematic interface shown in the right image of FIG. 6. A user may bend the first bendable portion 120a of the bendable device 100 with a finger to generate a bending event of the first bendable portion 120a relative to the body portion 110, and then the user may release the finger to flatten the bendable device 100 to generate a flattening event of the first bendable portion 120a relative to the main body portion 110, and based on the bending event and the flattening event, the bendable device 100 can be controlled to perform a photographing or video recording operation accordingly. In addition, in other exemplary applications, when the display areas of the bendable device 100 are collectively displaying a video recording interface, the bendable device 100 may stop recording a video by operating the first bendable portion 120a as described above to generate a bending event and a flattening event relative to the body portion 110.

While FIG. 6 shows an operation of the bendable device 100 by bending and flattening the first bendable portion 120a, it should be understood that based on similar principles, an operation of the bendable device 100 by bending and flattening the second bendable portion 120b is also possible.

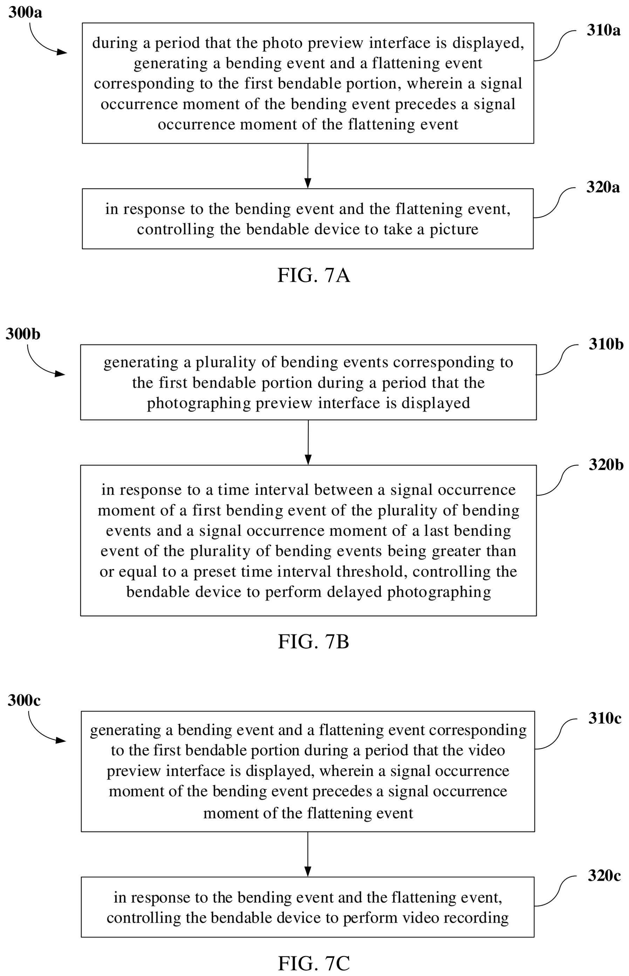

Referring to FIGs. 7A, 7B and 7C, they schematically illustrate, in the form of a flow chart, the control methods applicable to a bendable device according to some exemplary embodiments of the present disclosure, which may be applied to the application scenario illustrated in FIG. 6.

As shown in FIG. 7A, the control method 300a may be applied to the application scenario shown in FIG. 6, wherein the display areas of the bendable device 100 are collectively displaying a photographing preview interface. The control method 300a includes steps 310a and 320a:
at step 310a, during a period that the photographing preview interface is displayed, generating a bending event and a flattening event corresponding to the first bendable portion, wherein a signal occurrence moment of the bending event precedes a signal occurrence moment of the flattening event;
at step 320a, in response to the bending event and the flattening event, controlling the bendable device to take a picture.

In some exemplary embodiments, the control method 300a may further includes the following step: in response to a time interval between the signal occurrence moment of the bending event and the signal occurrence moment of the flattening event being greater than or equal to a preset time interval threshold, controlling the bendable device to perform delayed photographing. When performing delayed photographing, the delay time for delayed photographing may be determined based on a difference value between the time interval and the time interval threshold, or selected from a plurality of preset delay times.

As shown in FIG. 7B, the control method 300b may be applied to the application scenario shown in FIG. 6, wherein the display areas of the bendable device 100 are collectively displaying a photographing preview interface. The control method 300b includes steps 310b and 320b:
at step 310b, generating a plurality of bending events corresponding to the first bendable portion during a period that the photographing preview interface is displayed;
at step 320b, in response to a time interval between a signal occurrence moment of a first bending event of the plurality of bending events and a signal occurrence moment of a last bending event of the plurality of bending events being greater than or equal to a preset time interval threshold, controlling the bendable device to perform delayed photographing.

Thus, the control method 300b may be applied to the following operations by the user: during a period that the bendable device 100 is displaying the photographing preview interface, the user may bend the first bendable portion 120a of the bendable device 100 with a finger to generate a bending event of the first bendable portion 120a relative to the body portion 110, and maintain bending the first bendable portion 120a relative to the body portion 110 to generate a plurality of bending events subsequently with the event data for each bending event differing only in a signal occurrence moment, whereby the control of delayed photographing of the bendable device 100 may be triggered when the time interval between the signal occurrence moment of the first bending event and the signal occurrence moment of the last bending event is greater than or equal to a preset time interval threshold. Similarly, the delay time for delayed photographing may be determined based on the difference value between the time interval and the time interval threshold, or may be selected from a plurality of preset delay times.

As shown in FIG. 7C, the control method 300c may be applied to the application scenario shown in FIG. 6, wherein the display areas of the bendable device 100 are collectively displaying a video preview interface. The control method 300c includes steps 310c and 320c:
at step 310c, generating a bending event and a flattening event corresponding to the first bendable portion during a period that the video preview interface is displayed, wherein a signal occurrence moment of the bending event precedes a signal occurrence moment of the flattening event;
at step 320c, in response to the bending event and the flattening event, controlling the bendable device to perform video recording.

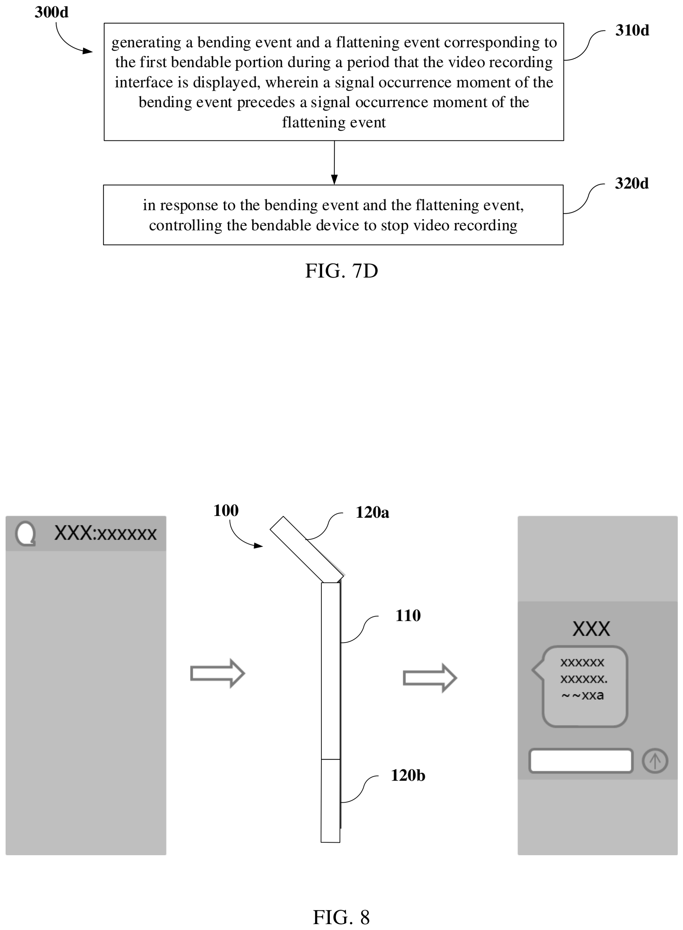

As shown in FIG. 7D, the control method 300d may be applied to the application scenario shown in FIG. 6, wherein the display areas of the bendable device 100 are collectively displaying a video recording interface. The control method 300d includes steps 310d and 320d:
at step 310d, generating a bending event and a flattening event corresponding to the first bendable portion during a period that the video recording interface is displayed, wherein a signal occurrence moment of the bending event precedes a signal occurrence moment of the flattening event;
at step 320d, in response to the bending event and the flattening event, controlling the bendable device to stop video recording.

Referring to FIG. 8 in conjunction with FIG. 1, an application scenario of a bendable device according to the present disclosure is schematically illustrated. As shown in FIG. 8, the bendable device 100 receives a message notification, which is briefly displayed in the first bendable display area of the first bendable portion 120a of the bendable device 100 as shown in the left image in FIG. 8. As shown in the middle image of FIG. 8, a user may bend the first bendable portion 120a of the bendable device 100 with a finger to generate a bending event of the first bendable portion 120a relative to the body portion 110. In response to the bending event, the message notification slides from the first bendable display area of the first bendable portion 120a into the body display area of the body portion 110, thereby displaying the content of the message in detail with a larger display area, as shown in the right image in FIG. 8. Furthermore, after reading the content of the message, the user may release the finger to flatten the first bendable portion 120a of the bendable device 100 relative to the body portion 110 to generate a flattening event of the first bendable portion 120a relative to the body portion 110. In response to the flattening event, the bendable device 100 may stop displaying the content of the message and resume an interface prior to displaying the content of the message; or in some exemplary embodiments, the bendable device 100 may also detect a gesture input of the user, and in response to a gesture instruction input by the user, stop displaying the content of the message and resume the interface before displaying the content of the message. Therefore, a flattening or bending operation of the bendable portion of the bendable device, in conjunction with an input gesture, enables a more flexible control of the bendable device. It should also be understood that the display area of the bendable device is implemented as a touch screen accordingly when receiving gestures input by a user.

While an operation of the bendable device 100 by bending and flattening the first bendable portion 120a is shown in FIG. 8, it should be understood that based on similar principles, an operation of the bendable device 100 by bending and flattening the second bendable portion 120b is also possible.

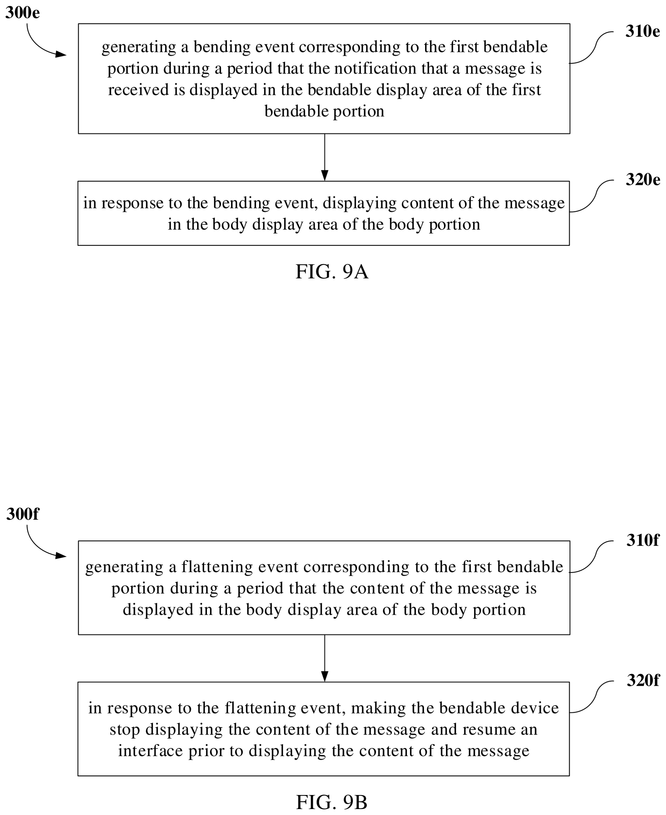

Referring to FIGs. 9A and 9B, they schematically illustrate, in the form of a flow chart, the control methods applicable to a bendable device according to some exemplary embodiments of the present disclosure, which may be applied to the application scenario illustrated in FIG. 8.

As shown in FIG. 9A, the control method 300e may be applied to the application scenario shown in FIG. 8, wherein the bendable display area of the first bendable portion 120a of the bendable device 100 is displaying a notification that a message is received. The control method 300e includes steps 310e and 320e:
at step 310e, generating a bending event corresponding to the first bendable portion during a period that the notification that a message is received is displayed in the bendable display area of the first bendable portion;
at step 320e, in response to the bending event, displaying content of the message in the body display area of the body portion.

As shown in FIG. 9B, the control method 300f may be applied to the application scenario shown in FIG. 8, where the body display area of the body portion 110 of the bendable device 100 is displaying content of a message. The control method 300f includes steps 310f and 320f:
At step 310f, generating a flattening event corresponding to the first bendable portion during a period that the content of the message is displayed in the body display area of the body portion;
at step 320f, in response to the flattening event, making the bendable device stop displaying the content of the message and resume an interface prior to displaying the content of the message.

In addition, in some exemplary embodiments, the control method may further include: receiving a gesture instruction from a user during a period that the body display area of the body portion is displaying the content of the message; and in response to the gesture instruction, making the bendable device stop displaying the content of the message and resume an interface prior to displaying the content of the message. Therefore, a flattening or bending operation of the bendable portion of the bendable device, in conjunction with an input gesture, enables a more flexible control of the bendable device. It should also be understood that the display area of the bendable device is implemented as a touch screen accordingly when receiving gestures input by a user.

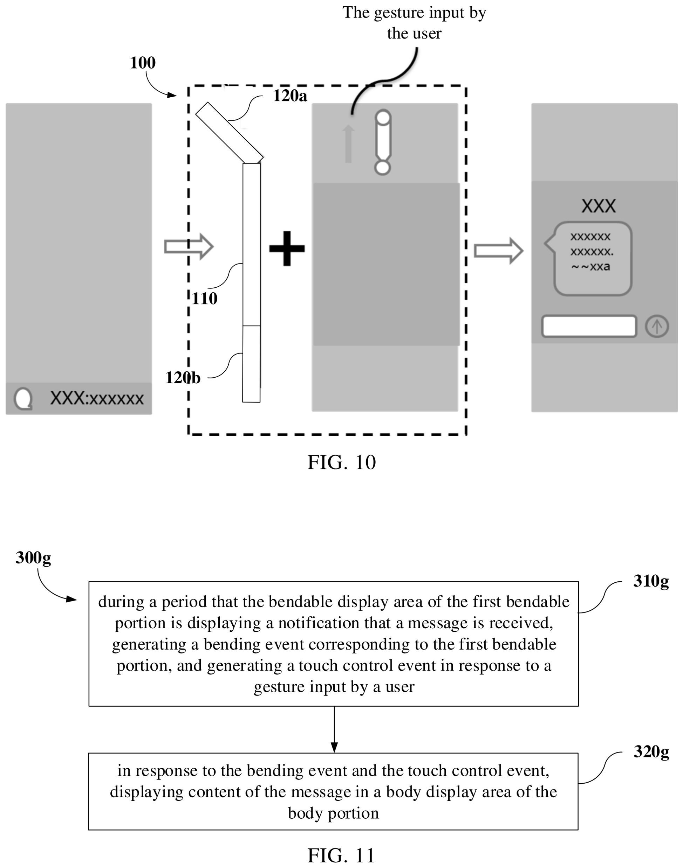

Referring to Fig. 10 in conjunction with FIG. 1, an application scenario of a bendable device according to the present disclosure is schematically illustrated. As shown in FIG. 10, the bendable device 100 receives a message notification, which is briefly displayed in the second bendable display area of the second bendable portion 120b of the bendable device 100 as shown in the left image in FIG. 10. As shown in the middle image in FIG. 10, a user may bend the first bendable portion 120a of the bendable device 100 with a finger to generate a bending event of the first bendable portion 120a relative to the body portion 110, and the user may also perform a gesture operation, as an example, a finger of the user may slide upward in the bendable display area of the first bendable portion 120a as shown in FIG. 8 to generate a touch control event. In response to the bending event and the touch control event, the message notification slides from the second bendable display area of the second bendable portion 120b into the body display area of the body portion 110, thereby displaying content of a message in detail with a larger display area, as shown in the right image in FIG. 10. Furthermore, after reading the content of the message, the user may release the finger to flatten the first bendable portion 120a of the bendable device 100 relative to the body portion 110 to generate a flattening event of the first bendable portion 120a relative to the body portion 110. In response to the flattening event, the bendable device 100 may stop displaying the content of the message and resume an interface prior to displaying the content of the message; or in some exemplary embodiments, the bendable device 100 may also detect a gesture input of the user, and in response to a gesture instruction input by the user, stop displaying the content of the message and resume the interface before displaying the content of the message. It should also be understood that the display area of the bendable device is implemented as a touch screen accordingly when receiving gestures input by a user.

While an operation of the bendable device 100 by bending and flattening the first bendable portion 120a is shown in FIG. 10, it should be understood that an operation of the bendable device 100 by bending and flattening the second bendable portion 120b is also possible based on similar principles. Furthermore, while the message notification is shown in FIG. 10 as being displayed briefly in the second bendable display area of the second bendable portion 120b of the bendable device 100, this is merely exemplary and not limiting, and the message notification may be displayed briefly in the first bendable display area of the first bendable portion 120a of the bendable device 100.

Referring to FIG. 11, it schematically illustrates, in the form of a flow chart, a control method applicable to a bendable device, which may be applied to the application scenario illustrated in FIG. 10, according to some exemplary embodiments of the present disclosure. As shown in FIG. 11, the control method 300g includes steps 310g and 320g:
at step 310g, during a period that the bendable display area of the first bendable portion is displaying a notification that a message is received, generating a bending event corresponding to the first bendable portion, and generating a touch control event in response to a gesture input by a user;
at step 320g, in response to the bending event and the touch control event, displaying content of the message in a body display area of the body portion.

As can be seen, a flattening or bending operation of the bendable portion of the bendable device, in conjunction with an input gesture, enables a more flexible control of the bendable device. It should also be understood that the display area of the bendable device is implemented as a touch screen accordingly when receiving gestures input by a user.

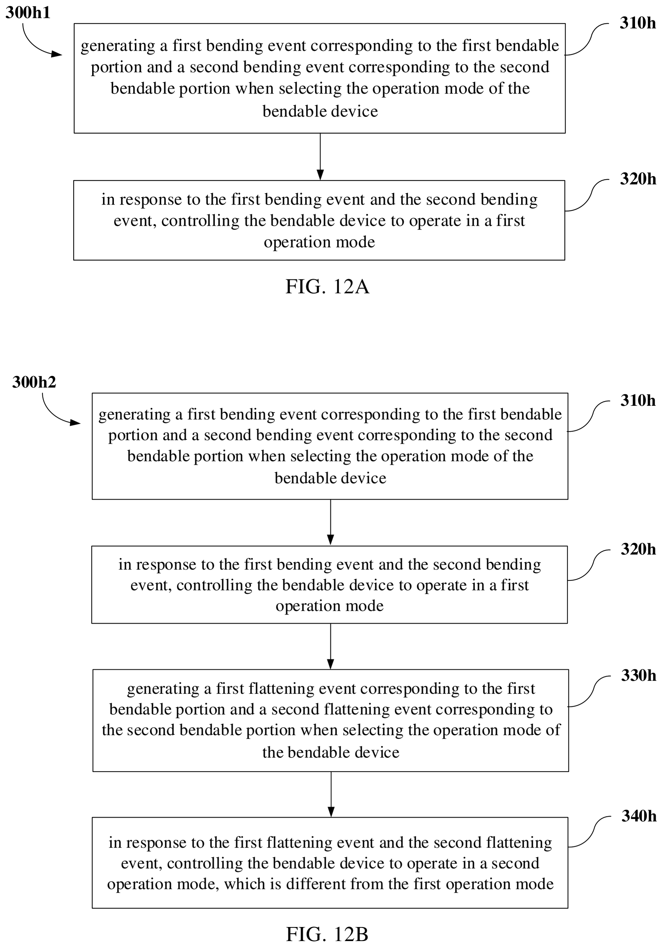

Referring to FIGs. 12A and 12B, which schematically illustrate, in the form of a flow chart, the control methods applicable to a bendable device in accordance with some exemplary embodiments of the present disclosure, which may be used in an application scenario including selecting an operation mode of the bendable device.

As shown in FIG. 12A, the control method 300hl may include steps 310h and 320h:
at step 310h, generating a first bending event corresponding to the first bendable portion and a second bending event corresponding to the second bendable portion when selecting the operation mode of the bendable device;
at step 320h, in response to the first bending event and the second bending event, controlling the bendable device to operate in a first operation mode.

As shown in FIG. 12A, the control method 300h2 may include steps 330h and 340h in addition to steps 310h and 320h (only steps 330h and 340h will be explained below, and steps 310h and 320h will not be repeatedly explained):
at step 330h, generating a first flattening event corresponding to the first bendable portion and a second flattening event corresponding to the second bendable portion when selecting the operation mode of the bendable device;
at step 340h, in response to the first flattening event and the second flattening event, controlling the bendable device to operate in a second operation mode, which is different from the first operation mode.

As a non-limiting example, the first operation mode may be, for example, a clock display mode such that the bendable device may be worn as a wristwatch, and the second operation mode may be, for example, a smartphone mode such that the bendable device may be operated as a smartphone.

It should be understood that, various exemplary application scenarios with respect to the bendable device of the present disclosure and corresponding control methods are described above, however, these are merely exemplary embodiments and not limiting, and a person having ordinary skills in the art, based on the teaching of the present disclosure, can envision other application scenarios and corresponding control methods, which should be considered as falling within the scope of the present disclosure as well.

In one or more examples, what is described above in connection with FIGs. 5-12B may be implemented by hardware, software, firmware, or any combination thereof. If implemented by software, it may be stored on or transmitted over, as one or more instructions or codes, a computer-readable medium and executed by a hardware-based processor. A computer-readable medium may include a computer-readable storage medium, which corresponds to a tangible medium such as a data storage medium, or include a communication medium including any medium that facilitates transfer of a computer program (including one or more instructions or codes described above) from one place to another, for example, according to a communication protocol. In this manner, a computer-readable medium generally may correspond to (1) a non-transitory tangible computer-readable storage medium or (2) a communication medium such as a signal or carrier wave. A data storage medium may be any available medium that can be read by one or more computers or one or more processors to retrieve instructions, codes and/or data structures for implementation of the techniques described in this disclosure. A computer program product may include a computer-readable medium and one or more instructions or codes stored thereon.

As non-limiting examples, such computer-readable storage medium can include RAM, ROM, EEPROM, CD ROM or other optical disk storage, magnetic disk storage or other magnetic storage, flash memory, or any other memory that can be used to store desired program code in the form of instructions or data structures and that can be read by a computer. Furthermore, any connection may be properly referred to as a computer-readable medium. It should be understood, however, that a computer-readable storage medium and a data storage medium do not include connections, carrier waves, signals, or other transient medium, but are instead directed to a non-transient, tangible storage medium. Magnetic disks and optical disks, as used herein, includes compact disc, laser disc, optical disk, digital versatile disc, floppy disk and blue-ray disc where magnetic disks usually reproduce data magnetically, while optical disks reproduce data optically with lasers. Combinations of the above should also be included within the scope of a computer-readable medium.

Terms used in the present disclosure are only used to describe the embodiments in the present disclosure, and are not intended to limit the present disclosure. As used in the present disclosure, the singular forms "a," "an," and "the" are intended to include the plural forms as well, unless the context clearly indicates otherwise. It should be further understood that the terms "comprises" and "comprising" when used in the present disclosure specify the presence of stated features but do not preclude the presence or addition of one or more other features. As used in the present disclosure, the term "and/or" includes any and all combinations of one or more of the associated listed items. It should be understood that, although the terms "first", "second", "third", and so on may be used in the present disclosure to describe various features, these features should not be limited by these terms. These terms are only used to distinguish one feature from another.

Unless otherwise defined, all terms (including technical and scientific terms) used in the present disclosure have the same meaning as commonly understood by one having ordinary skill in the art to which this disclosure belongs. It should be further understood that terms, such as those defined in commonly used dictionaries, should be interpreted as having a meaning that is consistent with their meaning in the relevant art and/or the context of the present specification, and should not be interpreted in an idealized or overly formal sense unless expressly defined in the present disclosure.

In the description herein, the term "one embodiment", "some embodiments", "an example", "a specific example", or "some examples" or the like means that a particular feature, structure, material, or characteristic described in connection with the embodiment or example is included in at least one embodiment or example of the present disclosure. In this specification, exemplary expressions with respect to the above terms are not necessarily directed to the same embodiment or example. Furthermore, the particular features, structures, materials, or characteristics described may be combined in a suitable manner into any one or more embodiments or examples. Moreover, without contradicting each other and without violating the technical principles, different embodiments or examples and features of different embodiments or examples described in this specification may be combined and assembled by a person having ordinary skills in the art, or some technical features may be omitted from different embodiments or examples described in this specification, and embodiments or examples derived based on such combination, assembly or omission are also regarded as falling within the scope of the present disclosure.

The methods described in the present disclosure include one or more steps or actions. The method steps and/or actions do not have to be performed in the order described in the present disclosure, but may be performed in a different order. For example, they may be performed simultaneously or in a reverse order, as long as they do not contradict the principles of the solutions described in the present disclosure. Furthermore, according to actual needs, the steps or acts in the methods described in the present disclosure may be replaced with different steps or acts, or additional steps or acts may also be included.

Although the present disclosure has been described in detail in connection with some exemplary embodiments, it is not to be limited to the specific form described therein. Rather, the scope of the present disclosure is defined only by the appended claims.

## Claims

1. A control method applicable to a bendable device comprising a body portion and at least one bendable portion that can be bent or flattened relative to the body portion, wherein the control method comprises following steps:
generating event data corresponding to the at least one bendable portion based on a spatial position of the at least one bendable portion relative to the body portion, the event data recording an event of the at least one bendable portion occurring relative to the body portion at a signal occurrence moment;
controlling the bendable device based on the event data and a current application scenario of the bendable device.

2. The control method according to claim 1, wherein the at least one bendable portion comprises a first bendable portion, the body portion comprises a body display area, each bendable portion comprises a bendable display area, and the current application scenario comprises that the body display area and at least the bendable display area of the first bendable portion are collectively displaying a photographing preview interface;
wherein:
the step of generating event data corresponding to the at least one bendable portion based on a spatial position of the at least one bendable portion relative to the body portion comprises: generating a bending event and a flattening event corresponding to the first bendable portion during a period that the photographing preview interface is displayed, wherein a signal occurrence moment of the bending event precedes a signal occurrence moment of the flattening event;
the step of controlling the bendable device based on the event data and a current application scenario of the bendable device comprises: in response to the bending event and the flattening event, controlling the bendable device to take a picture.

3. The control method according to claim 2, further comprising: in response to a time interval between the signal occurrence moment of the bending event and the signal occurrence moment of the flattening event being greater than or equal to a preset time interval threshold, controlling the bendable device to perform delayed photographing.

4. The control method according to claim 3, further comprising: determining a delay time for the delayed photographing based on a difference value between the time interval and the time interval threshold.

5. The control method according to claim 3, further comprising: selecting a delay time for the delayed photographing from a plurality of preset delay times.

6. The control method according to claim 1, wherein the at least one bendable portion comprises a first bendable portion, the body portion comprises a body display area, each bendable portion comprises a bendable display area, and the current application scenario comprises that the body display area and at least the bendable display area of the first bendable portion are collectively displaying a photographing preview interface;
wherein:
the step of generating event data corresponding to the at least one bendable portion based on a spatial position of the at least one bendable portion relative to the body portion comprises: generating a plurality of bending events corresponding to the first bendable portion during a period that the photographing preview interface is displayed;
the step of controlling the bendable device based on the event data and a current application scenario of the bendable device comprises: in response to a time interval between a signal occurrence moment of a first bending event of the plurality of bending events and a signal occurrence moment of a last bending event of the plurality of bending events being greater than or equal to a preset time interval threshold, controlling the bendable device to perform delayed photographing.

7. The control method according to claim 1, wherein the at least one bendable portion comprises a first bendable portion, the body portion comprises a body display area, each bendable portion comprises a bendable display area, and the current application scenario comprises that the body display area and at least the bendable display area of the first bendable portion are collectively displaying a video preview interface;
wherein:
the step of generating event data corresponding to the at least one bendable portion based on a spatial position of the at least one bendable portion relative to the body portion comprises: generating a bending event and a flattening event corresponding to the first bendable portion during a period that the video preview interface is displayed, wherein a signal occurrence moment of the bending event precedes a signal occurrence moment of the flattening event;
the step of controlling the bendable device based on the event data and a current application scenario of the bendable device comprises: in response to the bending event and the flattening event, controlling the bendable device to perform video recording.

8. The control method according to claim 1, wherein the at least one bendable portion comprises a first bendable portion, the body portion comprises a body display area, each bendable portion comprises a bendable display area, and the current application scenario comprises that the body display area and at least the bendable display area of the first bendable portion are collectively displaying a video recording interface;
wherein:
the step of generating event data corresponding to the at least one bendable portion based on a spatial position of the at least one bendable portion relative to the body portion comprises: generating a bending event and a flattening event corresponding to the first bendable portion during a period that the video recording interface is displayed, wherein a signal occurrence moment of the bending event precedes a signal occurrence moment of the flattening event;
the step of controlling the bendable device based on the event data and a current application scenario of the bendable device comprises: in response to the bending event and the flattening event, controlling the bendable device to stop video recording.

9. The control method according to claim 1, wherein the at least one bendable portion comprises a first bendable portion, the body portion comprises a body display area, each bendable portion comprises a bendable display area, and the current application scenario comprises that the bendable display area of the first bendable portion is displaying a notification that a message is received;
wherein:
the step of generating event data corresponding to the at least one bendable portion based on a spatial position of the at least one bendable portion relative to the body portion comprises: generating a bending event corresponding to the first bendable portion during a period that the notification that a message is received is displayed in the bendable display area of the first bendable portion;
the step of controlling the bendable device based on the event data and a current application scenario of the bendable device comprises: in response to the bending event, displaying content of the message in the body display area of the body portion.

10. The control method according to claim 1, wherein the at least one bendable portion comprises a first bendable portion, the body portion comprises a body display area, each bendable portion comprises a bendable display area, and the current application scenario comprises that the body display area of the body portion is displaying content of a message;
wherein:
the step of generating event data corresponding to the at least one bendable portion based on a spatial position of the at least one bendable portion relative to the body portion comprises: generating a bending event corresponding to the first bendable portion during a period that the content of the message is displayed in the body display area of the body portion;
the step of controlling the bendable device based on the event data and a current application scenario of the bendable device comprises: in response to the flattening event, making the bendable device stop displaying the content of the message and resume an interface prior to displaying the content of the message.

11. The control method according to claim 1, wherein the at least one bendable portion comprises a first bendable portion, the body portion comprises a body display area, each bendable portion comprises a bendable display area, and the current application scenario comprises that the body display area of the body portion is displaying content of a message, and the control method further comprises:
receiving a gesture instruction from a user during a period that the body display area of the body portion is displaying the content of the message;
in response to the gesture instruction, making the bendable device stop displaying the content of the message and resume an interface prior to displaying the content of the message.

12. The control method according to claim 1, wherein the at least one bendable portion comprises a first bendable portion, the body portion comprises a body display area, each bendable portion comprises a bendable display area, and the current application scenario comprises that the bendable display area of the first bendable portion is displaying a notification that a message is received;
wherein:
the control method further comprises: generating a touch control event in response to a gesture input by a user during a period that the bendable display area of the first bendable portion is displaying a notification that a message is received;
the step of generating event data corresponding to the at least one bendable portion based on a spatial position of the at least one bendable portion relative to the body portion comprises: generating a bending event corresponding to the first bendable portion during a period that the bendable display area of the first bendable portion is displaying a notification that a message is received;
the step of controlling the bendable device based on the event data and a current application scenario of the bendable device comprises: in response to the bending event and the touch control event, displaying content of the message in the body display area of the body portion.

13. The control method according to claim 1, wherein the at least one bendable portion comprises a first bendable portion and a second bendable portion, the first bendable region and the second bendable display region are located at two sides of the body display area, and the current application scenario comprises selecting an operation mode of the bendable device;
wherein,
the step of generating event data corresponding to the at least one bendable portion based on a spatial position of the at least one bendable portion relative to the body portion comprises: generating a first bending event corresponding to the first bendable portion and a second bending event corresponding to the second bendable portion when selecting an operation mode of the bendable device;
the step of controlling the bendable device based on the event data and a current application scenario of the bendable device comprises: in response to the first bending event and the second bending event, controlling the bendable device to operate in a first operation mode.

14. The control method according to claim 13, wherein:
the step of generating event data corresponding to the at least one bendable portion based on a spatial position of the at least one bendable portion relative to the body portion comprises: generating a first flattening event corresponding to the first bendable portion and a second flattening event corresponding to the second bendable portion when selecting an operation mode of the bendable device;
the step of controlling the bendable device based on the event data and a current application scenario of the bendable device comprises: in response to the first flattening event and the second flattening event, controlling the bendable device to operate in a second operation mode, which is different from the first operation mode.

15. The control method according to claim 11, wherein the event data comprises: a sensor signal, a sensing location, a signal occurrence event, and status information.

16. A control system applicable to a bendable device comprising a body portion and at least one bendable portion that can be bent or flattened relative to the body portion, wherein the control system comprises:
a sensing module comprising a sensor corresponding to the bendable portion, the sensor being configured to generate a sensor signal based on a spatial position of the bendable portion relative to the body portion;
an event data generating module configured to generate event data corresponding to the bendable portion based on the sensor signal, a sensing position of the sensor, a signal occurrence moment, and status information;
a control strategy determination module configured to: determine a control strategy for the bendable device based on the event data and a current application scenario of the bendable device;
an operation performing module configured to perform an operation to the bendable device based on the control strategy.

17. The control system according to claim 16, wherein the sensor comprises:
a magnet on the body portion and a Hall element on a corresponding bendable portion; or
a Hall element on the body portion and a magnet on a corresponding bendable portion.

18. A bendable device comprising a body portion and at least one bendable portion that can be bent or flattened relative to the body portion, wherein the bendable device comprises the control system according to claim 16 or 17.

19. A computer-readable storage medium storing thereon executable instructions that, when executed by a processor, implement the control method according to any one of claims 1 to 15.
